# EUROPÄISCHE PATENTANMELDUNG

(11) **EP 3 450 937 A2**
(43) Veröffentlichungstag der Anmeldung: **06.03.2019**
(21) Anmeldenummer: 18180029.3
(22) Anmeldetag: 27.06.2018
(51) Int. Cl.: G01J 3/02, G01J 3/12, B01L 9/00, G01N 21/03

(54) **SPEKTROMETRISCHE MESSVORRICHTUNG UND VERFAHREN ZUR ANALYSE EINES MEDIUMS UNTER VERWENDUNG EINER SPEKTROMETRISCHEN MESSVORRICHTUNG**

(30) Priorität: 09.08.2017 DE 102017213865
(71) Anmelder: Robert Bosch GmbH, 70442 Stuttgart (DE)
(72) Erfinder: Hermersdorf, Marion, 72770 Reutlingen (DE); Noltemeyer, Ralf, 71083 Herrenberg (DE); Husnik, Martin, 70176 Stuttgart (DE); Michel, Florian, 85665 Moosach (DE); Stein, Benedikt, 70193 Stuttgart (DE); Schelling, Christoph, 70619 Stuttgart (DE)

(57) **Zusammenfassung**

Die Erfindung betrifft eine spektrometrische Messvorrichtung (100), welche zur Erfassung spektrometrischer Daten von Festkörpern und Fluiden eingerichtet ist, umfassend eine Aufnahmevorrichtung (102), welche dazu eingerichtet ist, ein zu untersuchendes Medium (104') aufzunehmen, wobei ein Miniaturspektrometer (101) zur Erfassung der spektrometrischen Daten des Mediums (104') eingerichtet ist, wobei das Miniaturspektrometer (101)
• eine Beleuchtungseinheit (1010) umfasst, welche dazu eingerichtet ist, das Medium (104') mit einer elektromagnetischen Strahlung (1010') zu bestrahlen und
• eine Detektionseinheit (1011) umfasst, welche dazu eingerichtet ist, einen aus Richtung des Mediums (104') kommenden Strahlungsanteil (1011") der elektromagnetischen Strahlung (1010') zu detektieren,
wobei
• das Miniaturspektrometer (101), umfassend die Beleuchtungseinheit (1010) und die Detektionseinheit (1011), an einer ersten Seite (1021) der Aufnahmevorrichtung (102) angeordnet ist und
• an einer der ersten Seite (1021) gegenüberliegenden zweiten Seite (1022) der Aufnahmevorrichtung (102) eine Strahlablenkvorrichtung (103) angeordnet ist, welche dazu eingerichtet ist, zumindest einen Teil (1011') der von der Beleuchtungseinheit (1010) kommenden elektromagnetischen Strahlung (1010') in Richtung Detektionseinheit (1011) abzulenken.

## Beschreibung

### Stand der Technik

In US 5909280 A ist ein Mikrospektrometer beschrieben, welches eine monolithisch integrierte Lichtquelle und einen monolithisch integrierten Detektor umfasst. Das Mikrospektrometer wird als Teil eines Sensorsystems verwendet, welches dazu geeignet ist sowohl Festkörper als auch Flüssigkeiten zu untersuchen. Das Mikrospektrometer umfasst ein Fabry-Pérot Interferometer als spektrales Element und eine Kammer, in die das zu untersuchende Medium über einen Kanal eingelassen werden kann. Die Lichtquelle und der Detektor sind auf einander gegenüberliegenden Seiten der Kammer angeordnet.

### Kern und Vorteile der Erfindung

Die Erfindung betrifft eine spektrometrische Messvorrichtung, ein Verfahren zur Analyse eines Mediums unter Verwendung einer spektrometrischen Messvorrichtung und ein Computerprogrammprodukt.

Spektrale Informationen eines Mediums können aus einer vom Medium kommenden elektromagnetischen Strahlung, beispielsweise aus einer von dem Medium emittierten, reflektierten, transmittierten und/ oder gestreuten elektromagnetischen Strahlung, gewonnen werden, indem diese elektromagnetische Strahlung von einem Spektrometer aufgenommen und ausgewertet wird. Ein spektrales Element, wie beispielsweise ein Gitterspektrometer, Fabry-Pérot Interferometer, Transmissionsfilter/ Lineare Variable Filter oder Fourier-Transformations-Spektrometer, kann hierbei zwischen einer Lichtquelle und dem zu untersuchenden Medium und/oder zwischen dem Medium und einem Detektor angeordnet sein. Zur Erfassung spektrometrischer Daten des zu untersuchenden Mediums kann eine Transmissionsmessung oder eine Reflexionsmessung durchgeführt werden. Bei Transmissionsmessungen wird elektromagnetische Strahlung von dem zu untersuchenden Medium transmittiert, wobei die transmittierte elektromagnetische Strahlung spektrale Informationen über das Medium aufweist. Die transmittierte elektromagnetische Strahlung kann wellenlängenselektiv detektiert werden und Aufschluss über die spektrale Zusammensetzung des Mediums geben. Bei Reflexionsmessungen wird elektromagnetische Strahlung von dem zu untersuchenden Medium reflektiert, wobei die reflektierte elektromagnetische Strahlung spektrale Informationen über das Medium aufweist. Die reflektierte elektromagnetische Strahlung kann wellenlängenselektiv detektiert werden und Aufschluss über die spektrale Zusammensetzung des Mediums geben.

Fluide, d.h. Flüssigkeiten, Gase und Mischungen von Flüssigkeiten und Gasen, reflektieren zum Teil nur einen geringen Teil einer auf das Fluid auftreffenden elektromagnetischen Strahlung, ein größerer Anteil der auf das Fluid auftreffenden elektromagnetischen Strahlung wird von dem Fluid transmittiert.

Ein Vorteil der Erfindung mit den Merkmalen der unabhängigen Patentansprüche ist, dass zur Erfassung spektrometrischer Daten mittels einer spektrometrischen Messvorrichtung mit den Merkmalen des Anspruchs 1 sowohl Transmissionsmessungen als auch Reflexionsmessungen durchgeführt werden können und somit spektrale Daten/ Informationen sowohl von Festkörpern als auch von Fluiden mit einer hohen Signalstärke und somit mit einer hohen Genauigkeit und Zuverlässigkeit erfasst werden können. Dadurch kann die Zuverlässigkeit des Ergebnisses einer spektralen Analyse des Mediums erhöht werden und die Anwendungsmöglichkeiten der spektrometrischen Messvorrichtung erweitert werden.

Dies wird erreicht mit einer spektrometrischen Messvorrichtung, welche zur Erfassung spektrometrischer Daten von Festkörpern und Fluiden eingerichtet ist.

Die spektrometrische Messvorrichtung umfasst eine Aufnahmevorrichtung, wobei die Aufnahmevorrichtung dazu eingerichtet ist, ein zu untersuchendes Medium aufzunehmen. "Aufnehmen" bedeutet hierbei, dass das Medium beispielsweise in der Aufnahmevorrichtung angeordnet werden kann oder in die Aufnahmevorrichtung eingebracht werden kann. Ein Miniaturspektrometer zur Erfassung der spektrometrischen Daten des Mediums umfasst eine Beleuchtungseinheit, welche dazu eingerichtet ist, das Medium mit einer elektromagnetischen Strahlung zu bestrahlen und eine Detektionseinheit, welche dazu eingerichtet ist, einen aus Richtung des Mediums kommenden Strahlungsanteil der elektromagnetischen Strahlung zu detektieren. Die spektrometrische Messvorrichtung zeichnet sich dadurch aus, dass das Miniaturspektrometer an einer ersten Seite der Aufnahmevorrichtung angeordnet ist und an einer der ersten Seite gegenüberliegenden zweiten Seite der Aufnahmevorrichtung eine Strahlablenkvorrichtung angeordnet ist. Die Strahlablenkvorrichtung ist dazu eingerichtet, zumindest einen Teil der von der Beleuchtungseinheit kommenden elektromagnetischen Strahlung in Richtung Detektionseinheit abzulenken bzw. zu reflektieren. Ein Vorteil ist, dass der Strahlungsanteil, welcher von der Detektionseinheit detektiert wird, das Medium zweimal durchlaufen kann, bevor er von der Detektionseinheit detektiert wird. Beispielsweise kann der Strahlungsanteil auch erst nach Mehrfachreflektionen auf die Detektionseinheit auftreffen. Dadurch kann eine Stärke der Wechselwirkung mit dem Medium erhöht werden. Hierzu kann die Fläche um die Detektionseinheit reflektierend ausgebildet werden. Beispielsweise tritt die elektromagnetische Strahlung von der Beleuchtungseinheit in das Medium ein, wird von dem Medium transmittiert, an der Strahlablenkvorrichtung in Richtung Detektionseinheit reflektiert, von dem Medium erneut transmittiert und schließlich detektiert. Dadurch kann der Weg, welchen die elektromagnetische Strahlung im Medium zurücklegt und auf welchem die elektromagnetische Strahlung mit dem Medium Wechsel wirken kann, vergrößert werden, was vorteilhaft für das Sammeln spektraler Informationen des Mediums ist. Ein weiterer Vorteil ist, dass die spektrometrische Messvorrichtung eine reproduzierbare Messgeometrie aufweist, d.h., dass der Abstand zwischen Miniaturspektrometer und Strahlablenkvorrichtung und eine Ausrichtung des Miniaturspektrometers und der Strahlablenkvorrichtung relativ zueinander durch die spektrometrische Messvorrichtung festgelegt sind. Vorteilhafterweise können somit Messfehler, welche beispielswiese aufgrund einer fehlerhaften Ausrichtung des Miniaturspektrometers relativ zur Strahlablenkvorrichtung auftreten können, reduziert werden und dadurch die Zuverlässigkeit der erfassten spektrometrischen Daten erhöht werden. Dies ermöglicht es auch einem ungeübten bzw. ungeschulten Benutzer auf einfache Weise eine zuverlässige, aussagekräftige Messung durchzuführen. Des Weiteren können unerwünschte Messartefakte durch geschickte Wahl der Messgeometrie unterdrückt werden. Messartefakte können beispielswiese dann entstehen, wenn das Spektrometer in einem für die Messung ungünstigen Winkel relativ zur Probe gehalten wird. Beispielsweise kann durch eine ungünstige Relativausrichtung zwischen Miniaturspektrometer und Probe nur ein geringer Anteil der zu detektierenden elektromagnetischen Strahlung in das Miniaturspektrometer eintreten, sodass ein großer Anteil des Signals verloren geht oder es wird hauptsächlich nur direkte Reflexion detektiert, welche keine Informationen über das Innere der Probe umfasst. Eine geschickte Messgeometrie zeichnet sich hier dadurch aus, dass viel diffuse elektromagnetische Strahlung aber möglichst keine direkte Reflexion in das Miniaturspektrometer gelangt.

In einer Ausführungsform umfasst die Aufnahmevorrichtung eine Haltestruktur mit einer Öffnung. Beispielsweise kann die Haltestruktur eine kreisförmige Öffnung umschließen und/ oder es kann die Haltestruktur ringförmig ausgebildet sein. Alternativ oder ergänzend kann die Öffnung rechteckig, mehreckig, etc. ausgebildet sein oder eine beliebige Form aufweisen. Die Haltestruktur kann beispielsweise auch rechteckig, mehreckig, etc. ausgebildet sein oder eine beliebige Form aufweisen. Ein Vorteil ist, dass beispielsweise ein Gefäß, in welchem das Medium angeordnet ist, in die Öffnung eingebracht werden kann und die Haltestruktur das Gefäß und somit das Medium im Strahlengang zwischen dem Miniaturspektrometer und der Strahlablenkvorrichtung halten kann. Dadurch kann sichergestellt werden, dass die elektromagnetische Strahlung der Beleuchtungseinheit das Medium durchlaufen kann. Ein weiterer Vorteil ist, dass somit ein einfaches Einbringen und Herausnehmen des Mediums in bzw. aus der spektrometrischen Messvorrichtung durch den Benutzer ermöglicht wird.

Gemäß einer weiteren Ausführungsform umfasst die spektrometrische Messvorrichtung das Miniaturspektrometer, wobei das Miniaturspektrometer in die Haltestruktur integriert sein kann. Ein Vorteil ist, dass das Miniaturspektrometer zuverlässig in einem bekannten Abstand und in einer bekannten Ausrichtung relativ zur Strahlablenkvorrichtung fixiert ist, sodass beispielsweise Anwendungsfehler durch einen Benutzer, wie beispielsweise Aufsetzen des Miniaturspektrometers an einer für die Erfassung der spektrometrischen Daten ungeeigneten Position, reduziert werden können.

In einer Ausführungsform kann die Haltestruktur eine Positioniereinrichtung aufweisen, welche dazu eingerichtet ist, das Miniaturspektrometers an der ersten Seite der Aufnahmevorrichtung zu positionieren. Ein Vorteil ist, dass Anwendungsfehler durch einen Benutzer, wie beispielsweise das Aufsetzen des Miniaturspektrometers an einer für die Erfassung der spektrometrischen Daten ungeeigneten Position, reduziert werden können. Beispielsweise kann das Miniaturspektrometer als mobiles Endgerät ausgebildet sein, welches an der ersten Seite der spektrometrischen Messvorrichtung aufgesetzt werden kann. Die Positioniereinrichtung kann beispielsweise eine Markierung, eine Vertiefung, einen Vorsprung, etc. oder eine Kombination derselben umfassen, die dem Benutzer das Anordnen des Miniaturspektrometers erleichtern kann. Des Weiteren kann die Positioniereinrichtung dazu eingerichtet sein, das Miniaturspektrometer an der Aufnahmevorrichtung zu befestigen. Ein Vorteil ist, dass somit während der Messung ein Verändern der Position des Miniaturspektrometers relativ zur Strahlablenkvorrichtung vermieden werden kann und somit die Zuverlässigkeit der Messergebnisse erhöht werden kann.

In einer Ausführungsform umfasst das Medium einen Festkörper in einem Gefäß oder ein Fluid in einem Gefäß und die Öffnung ist dazu eingerichtet, das Medium bzw. das Gefäß im Strahlengang des Miniaturspektrometers zwischen der ersten Seite und der zweiten Seite aufzunehmen. Festkörper können beispielsweise Pulver, Granulate, etc. oder Mischungen derselben umfassen. Fluide können beispielsweise Flüssigkeiten, Gase, etc. oder Mischungen derselben umfassen. Des Weiteren kann das Medium eine Mischung von Festkörpern und Fluiden umfassen. Ein Vorteil ist, dass das Gefäß ein einfaches Einbringen und Herausnehmen des Mediums in bzw. aus der Aufnahmevorrichtung ermöglicht. Des Weiteren kann somit verhindert werden, dass die spektrometrische Messvorrichtung und das Medium in direkten Kontakt kommen und es kann ein Verschmutzen der spektrometrischen Messvorrichtung vermieden werden. Dadurch können mehrere Messungen verschiedener Medien mit einer hohen Zuverlässigkeit ohne gegenseitige Beeinflussung nacheinander ausgeführt werden.

In einer Ausführungsform kann eine Abmessung der Öffnung anpassbar sein. Die Abmessung kann beispielsweise einen Durchmesser, einen Umfang, eine Länge, eine Höhe, eine Breite, etc. der Öffnung umfassen. Beispielsweise kann eine der Öffnung zugewandte Fläche der Haltestruktur zumindest abschnittsweise mit einem flexiblen und/oder elastischen Material bedeckt sein. Alternativ oder ergänzend kann auf der der Öffnung zugewandten Fläche der Haltestruktur zumindest abschnittsweise eine lamellenartige Struktur angeordnet sein, wobei die Abmessung der Öffnung von einer Einstellung der lamellenartigen Struktur abhängt. Eine lamellenartige Struktur kann beispielsweise mindestens ein erstes bewegliches Lamellenelement umfassen, wobei ein erster Bereich des beweglichen Lamellenelements fest mit der Haltestruktur verbunden ist und ein zweiter Bereich des beweglichen Lamellenelements einen verstellbaren Winkel zur Haltestruktur aufweist. Durch Verändern des verstellbaren Winkels kann die Öffnung verkleinert oder vergrößert werden. Ein Vorteil ist, dass die Öffnung somit an das Medium bzw. an das Gefäß, in dem das Medium angeordnet ist, angepasst werden kann, sodass das Medium bzw. das Gefäß sicher und fest im Strahlengang zwischen dem Miniaturspektrometer und der Strahlablenkvorrichtung gehalten werden kann.

In einer Ausführungsform umfasst die spektrometrische Messvorrichtung mindestens einen Schrittmotor, welcher dazu eingerichtet ist, die lamellenartige Struktur einzustellen. Beispielsweise kann der Schrittmotor den verstellbaren Winkel einstellen. Ein Vorteil ist, dass die Abmessung der Öffnung an das Medium bzw. an das Gefäß angepasst werden kann.

In einer Ausführungsform umfasst die Strahlablenkvorrichtung eine anpassbare Spiegelschicht. Beispielsweise kann eine Form oder Oberflächenkontur der Spiegelschicht veränderbar sein. In einer Ausführungsform ist die Form oder Oberflächenkontur der Spiegelschicht in Abhängigkeit der Abmessung der Öffnung einstellbar. Wird beispielsweise eine Abmessung der Öffnung angepasst so kann die Form oder Oberflächenkontur der Spiegelschicht mit angepasst werden, sodass der Lichtweg an die neue Abmessung der Öffnung angepasst wird. Ein Vorteil ist, dass somit sichergestellt werden kann, dass die Strahlablenkvorrichtung zumindest einen Teil der elektromagnetischen Strahlung in Richtung Detektionseinheit ablenkt.

In einer Ausführungsform ist im Strahlengang zwischen der Beleuchtungseinheit und der Aufnahmevorrichtung ein Diffusor angeordnet oder anordenbar. Der Diffusor ermöglicht eine näherungsweise homogene Ausleuchtung des Mediums. Beispielsweise kann hierfür ein gerichteter Diffusor verwendet werden. Alternativ oder ergänzend kann eine über einen breiten Winkelbereich abstrahlende Lichtquelle, welche von der Beleuchtungseinheit umfasst wird, verwendet werden.

In einer Ausführungsform ist im Strahlengang zwischen der Aufnahmevorrichtung und der Detektionseinheit ein optisches Abbildungselement angeordnet oder anordenbar. Ein Vorteil ist, dass somit eine Strahlungsintensität, die von der Detektionseinheit detektiert wird, erhöht werden kann.

In einer Ausführungsform ist im Strahlengang zwischen der Beleuchtungseinheit und der Aufnahmevorrichtung ein spektrales Element angeordnet und/oder die Detektionseinheit umfasst ein spektrales Element. Das spektrale Element ermöglicht eine wellenlängenselektive Messung des Strahlungsanteils.

Ein Verfahren zur Analyse des Mediums, wobei das Medium einen Festkörper, eine Flüssigkeit und/ oder ein Gas umfassen kann, unter Verwendung der spektrometrischen Messvorrichtung umfasst die Schritte:
- Anordnen des Mediums in der Aufnahmevorrichtung der spektrometrischen Messvorrichtung,
- Bestrahlen des Mediums mit der elektromagnetischen Strahlung,
- Detektieren des aus Richtung des Mediums kommenden Strahlungsanteils zur Analyse des Mediums.
Das Verfahren zeichnet sich dadurch aus, dass der Strahlungsanteil nach einem ersten Durchlaufen des Mediums abgelenkt wird und nach einem zweiten Durchlaufen des Mediums detektiert wird. Alternativ oder ergänzend kann der Strahlungsanteil zwischen dem ersten Durchlaufen und dem zweiten Durchlaufen mindestens ein weiteres Mal abgelenkt, vorzugsweise mehrfach reflektiert werden, sodass der im Medium zurückgelegte Weg vorteilhafterweise verlängert wird. Dies kann beispielsweise durch das Anordnen reflektierender Bereiche, beispielsweise Spiegelschichten, an der Aufnahmevorrichtung und/ oder der Detektionseinheit ermöglicht werden. Ein Vorteil ist, dass somit der im Medium zurückgelegte Weg der elektromagnetischen Strahlung vergrößert wird und somit eine Wechselwirkung zwischen der elektromagnetischen Strahlung und dem Medium begünstigt wird. Ein weiterer Vorteil ist, dass mit diesem Verfahren sowohl Festkörper als auch Fluide spektrometrisch untersucht werden können.

In einer Ausführungsform kann im Schritt des Anordnens des Mediums in der Aufnahmevorrichtung die Abmessung der Öffnung eingestellt werden, wobei die Einstellung in Abhängigkeit von einer Abmessung des Mediums bzw. des Gefäßes erfolgt. Ein Vorteil ist, dass somit das Medium für die Messung sicher und fest in der Öffnung gehalten werden kann.

### Kurze Beschreibung der Zeichnungen

Ausführungsbeispiele der Erfindung sind in den Zeichnungen dargestellt und werden in der nachfolgenden Beschreibung näher erläutert. Gleiche Bezugszeichen in den Figuren bezeichnen gleiche oder gleichwirkende Elemente.

### Es zeigen

Fig. 1 eine Aufsicht einer spektrometrischen Messvorrichtung in einem Querschnitt gemäß einem Ausführungsbeispiel,
Fig. 2 eine Seitenansicht einer spektrometrischen Messvorrichtung gemäß einem Ausführungsbeispiel, welche an einem Gefäß, in welchem ein Medium eingebracht ist, angeordnet ist,
Fig. 3 einen Ausschnitt einer Aufsicht auf eine spektrometrische Messvorrichtung gemäß einem Ausführungsbeispiel, an der ein mobiles Endgerät angeordnet ist,
Fig. 4 einen Ausschnitt eine Aufsicht auf eine spektrometrische Messvorrichtung gemäß einem Ausführungsbeispiel, welche ein Miniaturspektrometer umfasst,
Fig. 5 einen Ausschnitt einer Aufsicht auf eine spektrometrische Messvorrichtung gemäß einem Ausführungsbeispiel, wobei in einer Öffnung einer Haltestruktur eine lamellenartige Struktur angeordnet ist,
Fig. 6 eine Aufsicht einer spektrometrischen Messvorrichtung in einem Querschnitt gemäß einem Ausführungsbeispiel, wobei ein Diffusor und ein optisches Abbildungselement im Strahlengang angeordnet sind,
Fig. 7 ein Ablaufdiagramm eines Verfahrens zur Analyse eines Mediums gemäß einem Ausführungsbeispiel und
Fig. 8 ein Ablaufdiagramm eines Verfahrens zur Analyse eines Mediums gemäß einem weiteren Ausführungsbeispiel.

### Ausführungsbeispiele der Erfindung

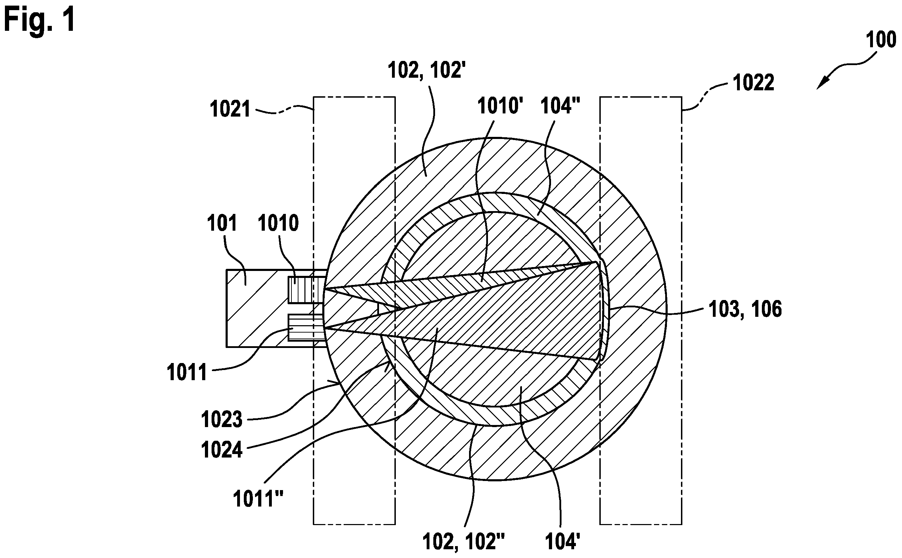

In Fig. 1 ist eine Aufsicht auf eine spektrometrische Messvorrichtung 100 in einem Querschnitt dargestellt. Die spektrometrische Messvorrichtung 100 ist zur Erfassung spektrometrischer Daten von Festkörpern und Fluiden eingerichtet. In Fig. 1 ist eine Aufnahmevorrichtung 102 dazu eingerichtet, ein zu untersuchendes Medium 104' aufzunehmen. Die Aufnahmevorrichtung 102 umfasst in diesem Ausführungsbeispiel eine Haltestruktur 102' mit einer Öffnung 102". In der Öffnung 102" kann das Medium 104' oder ein Gefäß 104" angeordnet werden, in welchem das Medium 104' angeordnet ist. Unter einer Öffnung 102" kann beispielsweise eine Vertiefung in der Haltestruktur 102' oder ein durch die Haltestruktur 102' durchgehendes Loch verstanden werden. Beispielsweise kann das Medium 104' ein Pulver, ein Granulat, eine Flüssigkeit, ein Gas oder eine Mischform der zuvor genannten umfassen. Das Gefäß 104" kann beispielsweise eine Flasche, ein Reagenzglas oder ein anderes zur Aufnahme des Mediums 104' geeignetes Gefäß 104" sein. Es ist jedoch nicht erforderlich, dass das Medium 104' in einem Gefäß 104" angeordnet ist, die spektrometrische Messvorrichtung 100 kann beispielsweise in das Medium 104' zumindest teilweise eingetaucht oder eingebracht werden, sodass das Medium 104' in die Öffnung 102" gelangen kann. In Fig. 1 ist die Haltestruktur 102' im Bereich der Öffnung 102" ringförmig ausgebildet. Die Haltestruktur 102' kann beispielsweise aus einem für die von einer Beleuchtungseinheit 1010 kommende elektromagnetische Strahlung 1010' transparenten Material ausgebildet sein. Die Öffnung 102" weist hier einen kreisförmigen Querschnitt auf. Beispielsweise kann der Durchmesser der Öffnung im Bereich von 1 Zentimeter (cm) bis 15 cm liegen, wobei die Durchmesser von 1 cm und 15 cm inbegriffen sind, oder kleiner als 1 cm und/oder größer als 15 cm sein. Die Öffnung 102" ist nicht auf einen kreisförmigen Querschnitt beschränkt, sondern kann beispielsweise auch rechteckig, elliptisch oder andersartig geformt sein. Beispielsweise kann die Öffnung 102" an das für die Messung verwendete Gefäß 104" angepasst sein. Mögliche Abmessungen der Öffnung 102" liegen im Bereich von einigen Zentimetern. Die Öffnung 102" ist beispielsweise dazu eingerichtet Flaschen, Reagenzgläser, Küvetten, etc. aufzunehmen. Die Haltestruktur kann beispielsweise aus einem Kunststoff ausgebildet sein.

An einer ersten Seite 1021 der Aufnahmevorrichtung 102 ist ein Miniaturspektrometer 101 angeordnet. Das Miniaturspektrometer 101 ist ein Spektrometer, welches Abmessungen im Zentimeterbereich, insbesondere im Bereich von weniger als 10 cm und mehr als 1 cm oder darunter aufweist. Beispielsweise ist das Miniaturspektrometer 101 größer als 1 cm³ und kleiner als 1000 cm³. Alternativ oder ergänzend kann das Miniaturspektrometer 101 auch kleiner als 1 cm³ und größer als 0,01 cm³ sein. Alternativ oder ergänzend kann das Miniaturspektrometer 101 auch kleiner als 100 cm³ und größer als 0,01 cm³ sein. Das Miniaturspektrometer 101 ist dazu eingerichtet, Strahlungseigenschaften in Abhängigkeit der Wellenlänge des detektierten elektromagnetischen Strahlungsanteils 1011" zu messen. Das Miniaturspektrometer 101 umfasst eine Beleuchtungseinheit 1010, welche dazu eingerichtet ist, das Medium 104' mit der elektromagnetischen Strahlung 1010' zu bestrahlen. Des Weiteren umfasst das Miniaturspektrometer 101 eine Detektionseinheit 1011, welche dazu eingerichtet ist den aus Richtung des Mediums kommenden Strahlungsanteil 1011" der elektromagnetischen Strahlung 1010' zu detektieren. Die Beleuchtungseinheit 1010 und die Detektionseinheit 1011 können beispielsweise in einem Gehäuse angeordnet sein. Das Miniaturspektrometer 101 ist in Fig. 1 auf einer von der Öffnung 102" abgewandten Außenfläche 1023 der Haltestruktur 102' angeordnet. Das Miniaturspektrometer 101 kann hierbei fest in die Haltestruktur 102' integriert sein und somit von der spektrometrischen Messvorrichtung 100 umfasst sein. Alternativ oder ergänzend kann das Miniaturspektrometer 101 auf die Haltestruktur 102' aufgesetzt oder abnehmbar an der Haltestruktur 102' angeordnet sein. Die Beleuchtungseinheit 1010 kann eine Lichtquelle umfassen. Die Lichtquelle kann beispielsweise eine Glühlampe, ein thermischer Emitter, ein Laser, eine oder mehrere Leuchtdioden (LED), LEDs mit Phosphorbeschichtung, Plasmastrahlungsquellen, etc. umfassen. Die Beleuchtungseinheit 1010 und/oder die Detektionseinheit 1011 können ein spektrales Element umfassen. Das spektrale Element kann beispielsweise ein Fabry-Pérot Interferometer, ein Gitterspektrometer, ein statisches oder bewegliches Fourier-Transformationsspektrometer oder einen anderen wellenlängenselektiven Filter umfassen. Die Detektionseinheit 1011 kann ein Detektorelement oder ein Detektorarray, welches mehrere Detektorelemente umfasst, umfassen. Als Detektorelement kann ein Strahlungssensor beispielsweise basierend auf Silizium (Si), Germanium (Ge), Germanium auf Silizium, Indium-Gallium-Arsenid (InGaAs), Bleiselenit (PbSe) verwendet werden. Als Strahlungssensoren eignen sich beispielsweise auch Fotodioden oder Bolometer. Strahlungssensoren können in Abhängigkeit einer Eigenschaft der auf den Strahlungssensor auftreffenden elektromagnetischen Strahlung ein elektrisches Signal ausgeben, welches ein Maß für die Strahlungseigenschaft ist. Strahlungssensoren können beispielsweise eine Intensität oder eine Energieflussdichte des Strahlungsanteils 1011" messen.

An einer der ersten Seite 1021 gegenüberliegenden zweiten Seite 1022 ist eine Strahlablenkvorrichtung 103 angeordnet. Die Strahlablenkvorrichtung 103 ist dazu eingerichtet, zumindest einen Teil (1011') der von der Beleuchtungseinheit 1010 kommenden elektromagnetischen Strahlung 1010' in Richtung Detektionseinheit 1011 abzulenken. In Fig. 1 umfasst die Strahlablenkvorrichtung 103 eine Spiegelschicht 106. Die Spiegelschicht 106 kann dabei einen Metallspiegel umfassen, wobei der Metallspiegel beispielsweise aus Aluminium oder Silber gefertigt sein kann. Alternativ oder ergänzend kann die Spiegelschicht 106 einen dielektrischen Schichtstapel umfassen und/oder eine retroreflektierende Oberfläche aufweisen. Die Strahlablenkvorrichtung 103 ist in Fig. 1 auf einer der Öffnung 102" zugewandten Innenfläche 1024 der Haltestruktur 102' angeordnet. Alternativ oder ergänzend kann die Strahlablenkvorrichtung 103 auf der Außenfläche 1023 der Haltestruktur 102' ausgebildet sein. Die von der Beleuchtungseinheit 1010 kommende elektromagnetische Strahlung 1010' kann an der Strahlablenkvorrichtung 103 gemäß den Gesetzen der Optik abgelenkt werden und somit in Richtung Detektionseinheit 1011 gelenkt werden.

Das Medium 104' ist im Strahlengang des Miniaturspektrometers 101 zwischen der ersten Seite 1021 und der zweiten Seite 1022 angeordnet. Unter dem Strahlengang des Miniaturspektrometers wird der geometrische Verlauf der elektromagnetischen Strahlung von der Beleuchtungseinheit 1010 zur Strahlablenkvorrichtung 103 und von der Strahlablenkvorrichtung 103 zur Detektionseinheit 1011 verstanden. Zur Verbesserung der Messergebnisse kann ein Weg auf dem die Wechselwirkung zwischen der elektromagnetischen Strahlung 1010', 1011' und dem Medium 104' möglichst lang gewählt werden, wobei die maximal mögliche Länge des Wegs von einem Absorptionsverhalten des Mediums 104' abhängt. Ist die Weglänge zu groß, so kann die Intensität des Strahlungsanteils 1011", der an der Detektionseinheit 1011 ankommt, zu gering sein und somit keine zuverlässige spektrale Auswertung möglich sein. Die Länge des Wegs kann durch Wahl des Durchmessers der Öffnung 102" und/oder durch die Wahl einer Abmessung des Gefäßes und damit einer Dicke des zu durchdringenden Mediums 104' eingestellt werden. In einem Ausführungsbeispiel weisen das Material aus dem die Haltestruktur 102' ausgebildet ist und das Material, aus dem das Gefäß 104" ausgebildet ist, einen ähnlichen Brechungsindex auf. Dadurch können vorteilhafterweise Strahlungsverluste an der Grenzfläche zwischen Haltestruktur 102' und Gefäß 104" reduziert oder vermieden werden. Des Weiteren kann die von der Beleuchtungseinheit 1010 kommende elektromagnetische Strahlung 1010' an die Form des Gefäßes 104" zur Vermeidung von Strahlungsverlusten angepasst werden. Dies kann beispielsweise durch geschickt gewählte Materialien und flexible optische Komponenten erreicht werden. Unter geschickt gewählten Materialien können beispielsweise luftfrei abschließende transparente und elastische Materialien verstanden werden. Flexible optische Komponenten sind beispielsweise motorisiert einstellbar oder elektrisch einstellbare Komponenten, wie beispielsweise Mikrospiegel, mittels derer eine Ausbreitungsrichtung der elektromagnetischen Strahlung 1010', 1011', 1011" angepasst werden kann. Ein weiteres Beispiel für flexible optische Komponenten sind beispielsweise diffraktive optische Elemente

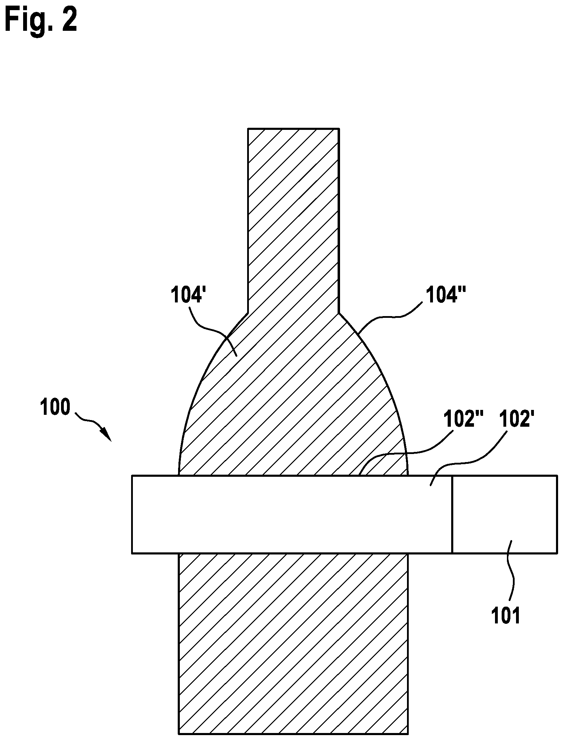

In Fig. 2 ist eine Seitenansicht der spektrometrischen Messvorrichtung 100 gemäß einem Ausführungsbeispiel dargestellt, wobei die spektrometrische Messvorrichtung 100 an dem Gefäß 104" angeordnet ist. Das Gefäß 104" ist in die Öffnung 102" der Haltestruktur 102' eingebracht. In diesem Ausführungsbeispiel ist das Gefäß 104" als Flasche ausgeführt, in der das Medium 104' angeordnet ist. Je nach Größe des Gefäßes 104" kann die spektrometrische Messvorrichtung 100 beispielsweise auch am Flaschenhals angeordnet werden.

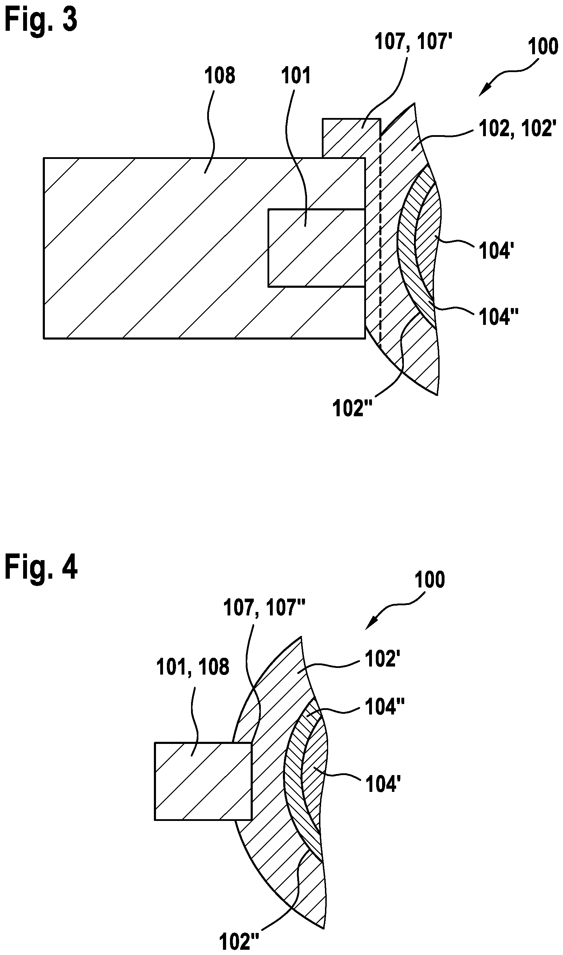

Das Miniaturspektrometer 101 kann fest an der Haltestruktur 102' angeordnet sein oder als eigenständiges Gerät ausgebildet sein, welches an der Haltestruktur 102' anordenbar oder befestigbar ist. Alternativ oder ergänzend kann das Miniaturspektrometer 101 in ein mobiles Endgerät 108, die beispielsweise ein Smartphone, ein Spektrometerstick oder ein Handspektrometer, integriert sein, welches sich passgenau in die spektrometrische Messvorrichtung 100 einstecken lässt und/oder welches an einer vorgegebenen Position der Haltestruktur 102' anordenbar ist. In Fig. 3 ist ein Ausführungsbeispiel gezeigt, in welchem das mobile Endgerät 108, welches das Miniaturspektrometer 101 umfasst, mittels einer Positioniereinrichtung 107 an einer vorgegebenen Position der Haltestruktur 102' angeordnet werden kann. Die Haltestruktur 102' weist in Fig. 3 einen Vorsprung 107' auf, an welchem das mobile Endgerät 108 angeordnet werden kann, sodass das Miniaturspektrometer 101 an der vorgegebenen Position, hier der ersten Seite 1021 der Haltestruktur 102', positioniert werden kann. Die vorgegebene Position ist derart gewählt, dass zumindest ein Teil (1011') der elektromagnetischen Strahlung 1010' von der Strahlablenkvorrichtung 103 in Richtung Detektionseinheit 1011 des Miniaturspektrometer 101 abgelenkt wird.

In Fig. 4 ist die Positioniereinrichtung 107 als Vertiefung in der Haltestruktur 102' ausgebildet. Das Miniaturspektrometer 101 bzw. das mobile Endgerät 108, welches das Miniaturspektrometer 101 umfasst, kann passgenau in der Vertiefung 107" angeordnet werden und lässt sich somit an einer vorgegebenen Position der Haltestruktur 102'anordnen. Dadurch kann ein Verrutschen des Miniaturspektrometers 101 vermieden werden. Das Miniaturspektrometer 101 kann auch fest mit der Haltestruktur 102' verbunden werden, wobei es beispielsweise bei der Herstellung in die Vertiefung 107" eingesteckt und mit der Haltestruktur 102' verbunden wird.

Das mobile Endgerät 108 kann eine Recheneinheit, welche zur Verarbeitung von Signalen oder Daten eingerichtet ist, eine Speichereinheit, welche zum Speichern von Signalen oder Daten eingerichtet, eine Kommunikationsschnittstelle zum Einlesen und/oder Ausgeben von Daten und eine Anzeigeeinheit, welche dazu eingerichtet ist Informationen und/oder Messergebnisse anzuzeigen, umfassen. Die Recheneinheit kann beispielsweise einen Prozessor oder einen Mikrocontroller umfassen. Die Kommunikationsschnittstelle kann dazu ausgebildet sein Daten drahtlos und/oder leitungsgebunden einzulesen oder auszugeben. Beispielsweise kann das mobile Endgerät 108 ein Smartphone sein, in dessen Speichereinheit eine Software-Applikation (App) gespeichert werden kann oder wobei die App herunterladbar oder online verfügbar sein kann. Die App kann zur Durchführung einer Messung mittels der spektrometrischen Messvorrichtung 100 eingerichtet sein. Die Messergebnisse bzw. Ergebnisse einer spektrometrischen Auswertung der Messergebnisse können beispielsweise über eine Anzeigeeinheit des mobilen Endgeräts 108 an den Benutzer ausgegeben werden. Mögliche Anzeigeeinheiten sind beispielsweise Displays oder Lautsprecher mittels derer optische, haptische oder akustische Ausgaben erfolgen können.

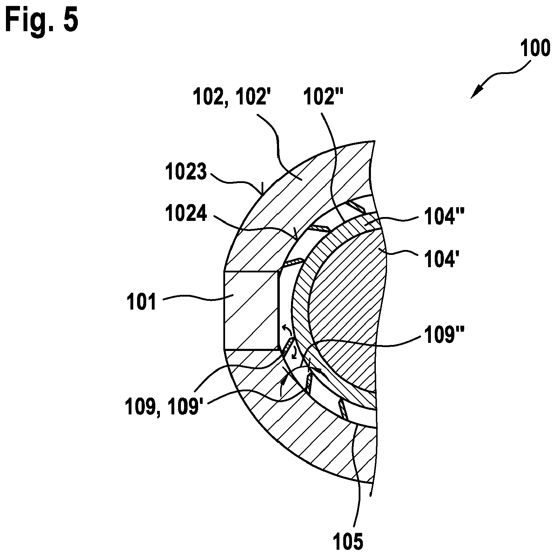

In Fig. 5 ist das Miniaturspektrometer 101 beispielhaft als Teil der Haltestruktur 102' ausgebildet. Alternativ oder ergänzend kann das Miniaturspektrometer 101 auch separat oder als Teil eines mobilen Endgeräts wie vorstehend beschrieben ausgebildet sein. Die Haltestruktur 102' umschließt die Öffnung 102" hier ringförmig. Die Haltestruktur 102' ist im Bereich der vorgegebenen Position unterbrochen, wobei das Miniaturspektrometer 101 im Bereich der vorgegebenen Position in die Haltestruktur 102' integriert ist. Zwischen Miniaturspektrometer 101 und dem Gefäß 104" ist hierbei kein Material der Haltestruktur 102' angeordnet. In Fig. 5 wird das Gefäß 104" von einer lamellenartigen Struktur 109 umschlossen, wobei die lamellenartige Struktur 109 auf einer der Öffnung 102" zugewandten Fläche der Haltestruktur 102', d.h. der Innenfläche 1024, angebracht ist. Eine Abmessung der Öffnung 102" ist in diesem Ausführungsbeispiel anpassbar. Durch das Anbringen der lamellenartigen Struktur 109 auf der Innenfläche 1024 kann beispielsweise ein Umfang, ein Durchmesser, einer Form, etc. der Öffnung 102" an eine Abmessung des Gefäß 104" angepasst werden. Somit ist ein einfaches Anordnen der spektrometrische Messvorrichtung 100 an dem Gefäß 104" möglich. Die lamellenartige Struktur 109 in Fig. 5 umfasst mehrere Lamellenelemente 109'. Die Lamellenelemente 109' können beispielsweise als bewegliche Strukturelemente ausgebildet sein, welche in einem ersten Bereich fest mit der Haltestruktur 102' verbunden sind und welche einen zweiten Bereich aufweisen können, dessen Winkel 109" zur Haltestruktur 102' einstellbar ist. Die möglichen Bewegungsrichtungen der Lamellenelemente 109' sind in Fig. 5 beispielhaft durch gebogene Richtungspfeile an einem der Lamellenelemente 109' eingezeichnet. Die Lamellenelemente 109' können beispielsweise aus einem elastischen Material ausgebildet sein. Beim Einführen des Gefäßes 104" in die Öffnung 102", können die Lamellenelemente 109' in Richtung Haltestruktur 102' angedrückt werden, sodass sich der Durchmesser der Öffnung 102" gegenüber dem Durchmesser der Öffnung 102" vor Einführen des Gefäßes 104" vergrößert. Die Abmessung der Öffnung 102" hängt somit von einer Einstellung der lamellenartigen Struktur 109 ab. In einem Ausführungsbeispiel kann die lamellenartige Struktur 109 mithilfe von Schrittmotoren eingestellt werden. Alternativ oder ergänzend kann die Einstellung der lamellenartigen Struktur auch manuell erfolgen. Es kann beispielsweise der verstellbare Winkel 109" der Lamellenelemente 109' jeweils relativ zur Haltestruktur 102' eingestellt werden, sodass die Abmessung der Öffnung 102" möglichst genau an die Abmessung des Gefäßes 104" angepasst werden kann. Die Schrittmotoren der Lamellenelemente 109' können mittels einer Steuereinheit angesteuert werden, wobei die Steuereinheit in das Miniaturspektrometer 101 oder bei Verwendung eines mobilen Endgeräts 108 mit Miniatirspektrometer 101 in das mobile Endgerät 108 integriert sein kann. Die Steuereinheit überträgt elektrische Signale an die Schrittmotoren, mithilfe derer die Winkel 109" eingestellt werden können. Die Bedienung der Steuereinheit durch einen Benutzer kann beispielsweise über einen Bildschirm erfolgen. Der Bildschirm kann beispielsweise als Touchscreen ausgeführt sein.

Die Strahlablenkvorrichtung 103 kann als verstellbare und/oder flexibale anpassbare Spiegelschicht ausgebildet sein. Wird die Abmessung der Öffnung 102" an die Form des Gefäßes 104" angepasst, so kann auch die Form der Spiegelschicht an die Form der Öffnung 104" angepasst werden und somit gleichzeitig der Lichtweg von der Beleuchtungseinheit 1010 zur Strahlablenkvorrichtung 103 und von der Strahlablenkvorrichtung zurück zur Detektionseinheit 1011 justiert bleiben. Die verstellbare Spiegelschicht kann beispielsweise ein flexibles Spiegelsubstrat, beispielsweise eine Polymerfolie, umfassen. Je nach benötigter Flexibilität und je nach benötigtem Wellenlängenbereich, der reflektiert werden soll, wird das dazu passende Spiegelmaterial ausgewählt, welches auf das flexible Spiegelsubstrat aufgebracht werden kann. Die verstellbare Spiegelschicht kann das Spiegelsubstrat und das Spiegelmaterial umfassen.

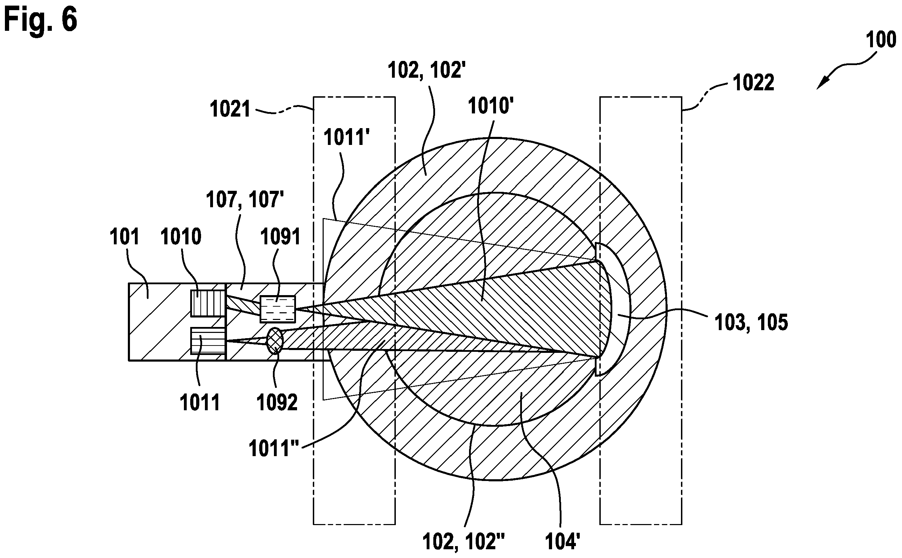

In Fig. 6 ist eine Aufsicht einer spektrometrischen Messvorrichtung 100 in einem Querschnitt gemäß einem Ausführungsbeispiel dargestellt, wobei ein Diffusor 1091 und ein optisches Abbildungselement 1092 im Strahlengang angeordnet sind. In diesem Ausführungsbeispiel ist die Positioniereinrichtung 107 als Vorsprung 107' ausgebildet, an welcher das Miniaturspektrometer 101 angeordnet ist oder ein mobiles Endgerät 108 anordenbar ist. In die Positioniereinrichtung 107 sind hier der Diffusor 1091 und das optische Abbildungselement 1092 integriert. Alternativ oder ergänzend können der Diffusor 1091 und/oder das optische Abbildungselement 1092 in die Haltestruktur 102' oder in das Miniaturspektrometer 101 integriert sein. Die von der Beleuchtungseinheit 1010 kommende elektromagnetische Strahlung 1010' kann zunächst durch eine oder mehreren optische Komponenten geformt werden, d.h. in diesem Ausführungsbeispiel, dass mithilfe des Diffusors 1091 die Winkelverteilung bzw. die Intensitätsverteilung der elektromagnetischen Strahlung 1010' homogenisiert werden kann und somit eine gleichmäßige Bestrahlung des Mediums 104' ermöglicht werden kann. Hierfür kann beispielsweise ein gerichteter Diffusor 1091 verwendet werden. Alternativ oder ergänzend kann eine über einen breiten Winkelbereich abstrahlende Lichtquelle verwendet werden, welche von der Beleuchtungseinheit 1007 umfasst werden kann. Durch eine geschickte Oberflächengestaltung der Strahlablenkvorrichtung 103 kann eine Funktion Robustheit der spektrometrische Messvorrichtung erhöht werden. Hierzu kann beispielsweise als Strahlablenkvorrichtung 103 eine Spiegelschicht 105 mit Oberflächenkontur verwendet werden. Vorteilhafte Oberflächenkonturen sind beispielsweise verschiedenartige und/oder unterschiedlich angeordnete metallische und/oder dielektrische Strukturen, die deutlich kleiner als die Wellenlänge sind (Metasurfaces). In dem in Fig. 6 gezeigten Ausführungsbeispiel ist das Medium 104' ohne Gefäß 104" in der Öffnung 102" angeordnet. Das Medium 104' kann auch in einem Gefäß 104" angeordnet werden. Die von der Beleuchtungseinheit 1010 kommende elektromagnetische Strahlung 1010', welche durch den Diffusor 1091 geformt ist, tritt durch die Haltestruktur 102' in das Medium 104' ein und wird von dem Medium 104' zumindest teilweise transmittiert. Die transmittierte elektromagnetische Strahlung trifft auf die Strahlablenkvorrichtung 103, welche auf der zweiten Seite 1022 der Aufnahmevorrichtung 102 angeordnet ist. Die Strahlablenkvorrichtung 103 reflektiert die auftreffende elektromagnetische Strahlung gemäß den Gesetzen der Optik und lenkt somit zumindest einen Teil (1011') der elektromagnetischen Strahlung 1010' in Richtung Detektionseinheit 1011 ab. Die Richtung, in die die elektromagnetische Strahlung abgelenkt wird, hängt unter anderem von der Form bzw. der Oberflächenkontur der Spiegelschicht 105 ab. Ein Strahlungsanteil 1011" des Teils (1011') der elektromagnetischen Strahlung 1010' wird mittels eines optischen Abbildungselements 1092 in die Detektionseinheit 1011 geführt. Als optisches Abbildungselement 1092 können beispielsweise optische Linsen, Sammellinsen oder Lichtführungsoptiken verwendet werden. Wie bereits zuvor beschrieben können die Beleuchtungseinheit 1010 und/oder die Detektionseinheit 1011 ein spektrales Element umfassen, um eine Erfassung spektrometrischer Daten zu ermöglichen. Beispielsweise kann das spektrale Element zwischen der Beleuchtungseinheit 1010 und der Aufnahmevorrichtung 102 angeordnet sein.

Alternativ oder ergänzend kann in einem hier nicht dargestellten Ausführungsbeispiel im Strahlengang zwischen der Beleuchtungseinheit 1010 und der Aufnahmevorrichtung 102 ein Diffusor 1091 angeordnet oder anordenbar sein. Alternativ oder ergänzend kann in einem hier nicht dargestellten Ausführungsbeispiel im Strahlengang zwischen der Aufnahmevorrichtung 102 und der Detektionseinheit 1011 ein optisches Abbildungselement 1092 angeordnet oder anordenbar sein.

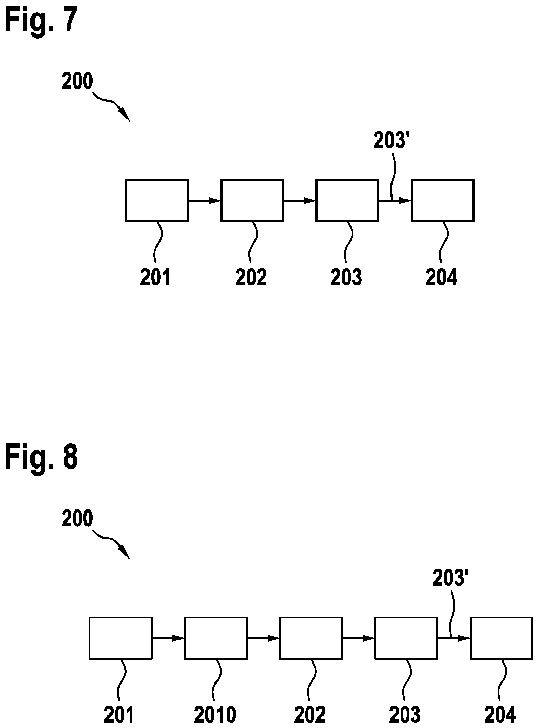

In Fig. 7 ist ein Verfahren 200 zur Analyse eines Mediums 104' unter Verwendung einer spektrometrische Messvorrichtung 100 als Flussdiagramm dargestellt, wobei das Verfahren die Schritte Anordnen 201 des Mediums 104' in der Aufnahmevorrichtung 102 der spektrometrische Messvorrichtung 100, Bestrahlen 202 des Mediums 104' mit der elektromagnetischen Strahlung 1010', Detektieren 203 des aus Richtung des Mediums 104' kommenden Strahlungsanteils 1011" und spektrale Auswertung 204 des aus Richtung des Mediums kommenden Strahlungsanteils 1011" zur Analyse des Mediums 104' umfasst. Der Strahlungsanteil 1011" wird nach einem ersten Durchlaufen des Mediums 104' abgelenkt und nach einem zweiten Durchlaufen des Mediums 104' detektiert. Das Medium 104' kann beispielsweise in einem Gefäß 104" angeordnet sein und in die Öffnung 102" der Haltestruktur 102' eingebracht werden. Das Detektieren 203 des Strahlungsanteils 1011" kann wie vorstehend beschrieben in der Detektionseinheit 1011 erfolgen. Im Schritt der spektralen Auswertung 204 wird ein Detektionssignal 203' ausgewertet, welches die spektrometrischen Daten umfasst, wobei sich das Detektionssignal 203' aus dem Detektieren 203 des Strahlungsanteils 1011" ergibt. Die spektrometrischen Daten können beispielsweise ein Spektrum oder Ausschnitte eines Spektrums umfassen. Beispielsweise können die spektrometrischen Daten einen Intensitätsverlauf, welcher über die Wellenlänge, die Zeit oder über den Ort aufgetragen ist, oder einen Verlauf eines elektrischen Signals umfassen. Das Detektionssignal 203' kann beispielsweise ein elektrisches Signal umfassen. Beispielsweise können spektrale Informationen mittels eines Computeralgorithmus und in einem Speicher hinterlegten Referenzdaten, beispielsweise Referenzspektren oder Ausschnitte von Referenzspektren, aus dem Detektionssignal 203' ermittelt werden. Die spektrale Auswertung 204 kann im Miniaturspektrometer 101, in dem mobilen Endgerät 108 und/oder in einer bezüglich des Miniaturspektrometers 101 extern angeordneten Auswerteeinheit, beispielsweise einer Cloud, erfolgen. Das Ergebnis der spektralen Auswertung 204 kann an einen Benutzer, beispielsweise in Form einer optischen, haptischen oder akustischen Ausgabe, ausgegeben werden. Das Ergebnis der spektralen Auswertung 204, d.h. eine spektrale Information des Mediums 104', kann beispielsweise eine Information über eine chemische Zusammensetzung des Mediums 104', ein Vorhandensein und/oder eine Konzentration mindestens eines chemischen Stoffs im Medium 104' oder eine Identifizierung des Mediums 104' sein.

In Fig. 8 wird im Schritt des Anordnens 201 des Mediums 104' in der Aufnahmevorrichtung 102 die Abmessung der Öffnung 102" eingestellt 2010, wobei die Einstellung 2010 in Abhängigkeit einer Abmessung des Mediums 104' oder eines Gefäßes 104", in welchem das Medium 104' angeordnet ist, erfolgt.

Das Anordnen 201 des Mediums 104' in der Aufnahmevorrichtung 102 kann beispielsweise durch einen Benutzer erfolgen. Beispielsweise kann die spektrometrische Messvorrichtung 100 zumindest teilweise in das Medium 104' eingetaucht werden oder es kann das Medium 104' in das Gefäß 104" eingebracht werden und das Gefäß 104" mit dem Medium in die Aufnahmevorrichtung 102 eingebracht werden. Hierzu kann beispielsweise die spektrometrische Messvorrichtung 100 an dem Gefäß 104" angeordnet werden. Die Ansteuerung der spektrometrischen Messvorrichtung 100 kann über ein in die Aufnahmevorrichtung 102 eingestecktes Smartphone als Steuermodul oder ein separates Steuermodul, welches beispielsweise einen Bildschirm umfassen kann, erfolgen. Beispielsweise kann der Benutzer einem Messung über das Steuermodul starten und/oder die Abmessung der Öffnung 102" wie vorstehend beschrieben an das Gefäß 104"oder das Medium 104' anpassen. Beispielsweise kann eine App auf dem Smartphone installiert werden, wobei die App eine Durchführung des Verfahrens 200 zur Analyse des Mediums 104" unter Verwendung der spektrometrische Messvorrichtung 100 ermöglichen kann. Des Weiteren kann die App dem Benutzer Hinweise anzeigen, um ihn bei der Durchführung des Verfahrens 200 zu unterstützen.

Mit der spektrometrische Messvorrichtung 100 bzw. dem Verfahren 200 zur Analyse des Mediums 104' können beispielsweise die nachfolgend genannten Flüssigkeiten untersucht werden. Die Flüssigkeiten können in Gefäßen 104" angeordnet sein, welche in die spektrometrische Messvorrichtung 100 eingebracht werden können, das Medium 104' kann in die spektrometrische Messvorrichtung 100 eingebracht werden oder die spektrometrische Messvorrichtung 100 kann in die Flüssigkeiten eingetaucht werden. Gefäße 104" sind vorzugsweise zumindest teilweise transparent im Bereich der verwendeten elektromagnetischen Strahlung 1010'. Beispielsweise können ein Verhältnis von Ethanol zu Methanol in einer Flüssigkeit, eine Herkunft und/oder Reinheit von Olivenölen, eine Qualität und/oder Inhaltsstoffe von Weinen oder Schaumweinen, ein Zuckergehalt und/oder Inhaltsstoffe von Fruchtsäften oder eine Verschmutzung von Wasser bestimmt werden.

## Patentansprüche

1. Spektrometrische Messvorrichtung (100), welche zur Erfassung spektrometrischer Daten von Festkörpern und Fluiden eingerichtet ist, umfassend eine Aufnahmevorrichtung (102), welche dazu eingerichtet ist, ein zu untersuchendes Medium (104') aufzunehmen, wobei ein Miniaturspektrometer (101) zur Erfassung der spektrometrischen Daten des Mediums (104') eingerichtet ist, wobei das Miniaturspektrometer (101)
• eine Beleuchtungseinheit (1010) umfasst, welche dazu eingerichtet ist, das Medium (104') mit einer elektromagnetischen Strahlung (1010') zu bestrahlen und
• eine Detektionseinheit (1011) umfasst, welche dazu eingerichtet ist, einen aus Richtung des Mediums (104') kommenden Strahlungsanteil (1011") der elektromagnetischen Strahlung (1010') zu detektieren,
**dadurch gekennzeichnet, dass**
• das Miniaturspektrometer (101), umfassend die Beleuchtungseinheit (1010) und die Detektionseinheit (1011), an einer ersten Seite (1021) der Aufnahmevorrichtung (102) angeordnet ist und
• an einer der ersten Seite (1021) gegenüberliegenden zweiten Seite (1022) der Aufnahmevorrichtung (102) eine Strahlablenkvorrichtung (103) angeordnet ist, welche dazu eingerichtet ist, zumindest einen Teil (1011') der von der Beleuchtungseinheit (1010) kommenden elektromagnetischen Strahlung (1010') in Richtung Detektionseinheit (1011) abzulenken.

2. Spektrometrische Messvorrichtung (100) nach Anspruch 1, **dadurch gekennzeichnet, dass** der Aufnahmevorrichtung (102) eine Haltestruktur (102') mit einer Öffnung (102") umfasst.

3. Spektrometrische Messvorrichtung (100) nach Anspruch 2, **dadurch gekennzeichnet, dass** die spektrometrische Messvorrichtung (100) das Miniaturspektrometer (101) umfasst und das Miniaturspektrometer (101) in die Haltestruktur (102') integriert ist.

4. Spektrometrische Messvorrichtung (100) nach Anspruch 2, **dadurch gekennzeichnet, dass** die Haltestruktur (102') eine Positioniereinrichtung (107) aufweist, welche dazu eingerichtet ist, das Miniaturspektrometer (101) an der ersten Seite (1021) der Aufnahmevorrichtung (102) zu positionieren.

5. Spektrometrische Messvorrichtung (100) nach einem der vorhergehenden Ansprüche, **dadurch gekennzeichnet, dass** das Medium (104') einen Festkörper in einem Gefäß (104") oder ein Fluid in einem Gefäß (104") umfasst und dass die Öffnung (102") dazu eingerichtet ist, das Gefäß (104") im Strahlengang des Miniaturspektrometers (101) zwischen der ersten Seite (1021) und der zweiten Seite (1022) aufzunehmen.

6. Spektrometrische Messvorrichtung (100) nach einem der Ansprüche 2 bis 5, **dadurch gekennzeichnet, dass** eine Abmessung der Öffnung (102") anpassbar ist.

7. Spektrometrische Messvorrichtung (100) nach Anspruch 6, **dadurch gekennzeichnet, dass** auf einer der Öffnung (102") zugewandten Fläche (1024) der Haltestruktur (104') zumindest abschnittsweise eine lamellenartige Struktur (109) angeordnet ist, wobei die Abmessung der Öffnung (102") von einer Einstellung der lamellenartigen Struktur (109) abhängt.

8. Spektrometrische Messvorrichtung (100) nach Anspruch 7, **dadurch gekennzeichnet, dass** die spektrometrische Messvorrichtung (100) einen Schrittmotor umfasst, welcher dazu eingerichtet ist, die lamellenartige Struktur (109) einzustellen.

9. Spektrometrische Messvorrichtung (100) nach einem der vorhergehenden Ansprüche, **dadurch gekennzeichnet, dass** die Strahlablenkvorrichtung (103) eine anpassbare Spiegelschicht umfasst.

10. Spektrometrische Messvorrichtung (100) nach einem der vorhergehenden Ansprüche, **dadurch gekennzeichnet, dass** im Strahlengang zwischen der Beleuchtungseinheit (1010) und der Aufnahmevorrichtung (102) ein Diffusor (1091) angeordnet oder anordenbar ist.

11. Spektrometrische Messvorrichtung (100) nach einem der vorhergehenden Ansprüche, **dadurch gekennzeichnet, dass** im Strahlengang zwischen der Aufnahmevorrichtung (102) und der Detektionseinheit (1011) ein optisches Abbildungselement (1092) angeordnet oder anordenbar ist.

12. Spektrometrische Messvorrichtung (100) nach einem der vorhergehenden Ansprüche, **dadurch gekennzeichnet, dass** im Strahlengang zwischen der Beleuchtungseinheit (1010) und der Aufnahmevorrichtung (102) ein spektrales Element angeordnet ist und/oder dass die Detektionseinheit (1011) ein spektrales Element umfasst.

13. Verfahren (200) zur Analyse eines Mediums (104') unter Verwendung einer spektrometrischen Messvorrichtung (100) nach einem der vorhergehenden Ansprüche, wobei das Verfahren (200) die Schritte
• Anordnen (201) des Mediums (104') in der Aufnahmevorrichtung (102) der spektrometrischen Messvorrichtung (100),
• Bestrahlen (202) des Mediums (104') mit der elektromagnetischen Strahlung (1010'),
• Detektieren (203) des aus Richtung des Mediums kommenden Strahlungsanteils (1011") und
• spektrale Auswertung (204) des detektierten Strahlungsanteils zur Analyse des Mediums,
umfasst, **dadurch gekennzeichnet, dass** der Strahlungsanteil (1011") nach einem ersten Durchlaufen des Mediums (104') abgelenkt wird und nach einem zweiten Durchlaufen des Mediums (104') detektiert wird.

14. Verfahren (200) nach Anspruch 13 zur Analyse eines Mediums (104') unter Verwendung einer spektrometrische Messvorrichtung (100) gemäß einem der Ansprüche 6 bis 8, **dadurch gekennzeichnet, dass** im Schritt des Anordnens (201) des Mediums (104') in der Aufnahmevorrichtung (102) die Abmessung der Öffnung (102") eingestellt wird (2010), wobei die Einstellung (2010) in Abhängigkeit einer Abmessung des Mediums (104') oder eines Gefäßes (104"), in welchem das Medium (104') angeordnet ist, erfolgt.

15. Computerprogrammprodukt zur Durchführung des Verfahrens (200) zur Analyse eines Mediums (104') nach einem der Ansprüche 13 oder 14.
